# EUROPEAN PATENT SPECIFICATION

(11) **EP 3 077 082 B1**
(45) Date of publication and mention of the grant of the patent: **14.11.2018**
(21) Application number: 14803167.7
(22) Date of filing: 28.11.2014
(51) Int. Cl.: B01D 53/86, C01B 17/04, D01F 13/02, B01J 23/00

(54) **CATALYTIC OXIDATION OF A GAS COMPRISING HYDROGEN SULFIDE**
KATALYTISCHE OXIDATION EINES SCHWEFELWASSERSTOFF ENTHALTENDEN GASES
OXYDATION CATALYTIQUE D'UN GAZ COMPRENANT D'HYDROGÈNE SULFURÉ

(30) Priority: 02.12.2013 EP 13195222; 02.12.2013 EP 13195223
(43) Date of publication of application: 12.10.2016
(73) Proprietor: Haldor Topsøe A/S, 2800 Kgs. Lyngby (DK)
(72) Inventor: THELLEFSEN, Morten, DK-3400 Hillerød (DK)
(74) Representative: Haldor Topsøe A/S
(86) International application number: PCT/EP2014/075962
(87) International publication number: WO 2015/082351

(56) References cited:
- EP-A1- 0 787 840
- EP-A1- 1 495 795
- EP-A2- 0 852 159
- AT-B- 398 785
- DE-A1-102005 022 164
- FR-A1- 2 538 716
- GB-A- 782 011
- US-A- 4 374 819

## Description

The invention relates to catalytic oxidation of gases comprising H₂S and at least one of CO, COS and CS₂, in which the concentration of H₂S is at least 0.05 vol% and the sum of concentrations of CO, COS and CS₂ gases is at least 0.05 vol%. Such lean gases could e.g. be a waste stream from the production of viscose fibers or other viscose products. H₂S, CO, COS and CS₂ gases are toxic and must be treated before emitted to the atmosphere. A commonly used method is to oxidize these species to SO₂, CO₂ and H₂O and subsequently remove the SO₂ from the gas.

The SO₂ can be removed by conversion into sulfuric acid by catalytic conversion of SO₂ to SO₃, reaction with water vapor and condensation of the sulfuric acid vapor, but also SO₂ scrubbing methods can be used, e.g. reaction with lime to form gypsum or reaction with sodium hydroxide to form sodium sulfite/sulfate.

The conversion of H₂S and CS₂ in the lean gas into SO₂ can be by thermal oxidation at temperatures around 850 - 1000 °C. Due to the low calorific value of the lean gas, thermal oxidation requires heating the lean gas, typically by combustion of significant amounts of support fuel, which increases the cost of the process.

Catalytic oxidation of H₂S and CS₂ can proceed at much lower temperature and is thus much more economic for lean H₂S and COS+CS₂ gases.

According to the prior art (e.g. AT398785 B), H₂S, CO, COS and CS₂ are catalytically oxidized on a noble metal promoted catalyst; the expensive noble metal, platinum, is usually the active component of the catalyst, e.g. in combination with copper and manganese oxide on a carrier such as silica, at a temperature of 240°C. The resulting gas stream where all sulfur species are oxidized to SO₂ is directed to a vanadium based catalyst for oxidizing SO₂ to SO₃ with subsequent withdrawal of sulfuric acid by condensation.

However, according to the present disclosure, a catalyst system is disclosed, in which a sequential process results in a lower required gas temperature and a reduced amount of noble metal promoted catalyst. This catalyst system employs the fact that the exothermal oxidation of H₂S is initiated a temperatures as low as 200°C on a metal oxide oxidation catalyst, and that the oxidation of H₂S (and partial oxidation of CS₂ to COS/CO) increases the temperature to at least 320°C, which is required for oxidation of CS₂, COS and CO on a catalyst promoted with palladium, Pd.

In the present application the term "a material being catalytically active" e.g. in the oxidation of hydrogen sulfide at a given temperature, shall be understood as a material, in the presence of which the reaction rate of the mentioned reaction (here oxidation of hydrogen sulfide) is increased by at least an order of magnitude, preferably 2 orders of magnitude, and even more preferably 5 orders of magnitude when compared to the gas phase reaction.

Similarly in the present application the term "a material being catalytically inactive" e.g. in the oxidation of carbon monoxide at a given temperature shall be understood as a material, in the presence of which the reaction rate of the mentioned reaction (here the oxidation of carbon monoxide) is not similarly increased compared to the gas phase reaction. As will be understood by the skilled person, the term catalytically inactive with respect to a reaction shall be understood as having a very small activity with respect to that reaction, compared to other reactions, but not as absolutely inert, since all materials will show some catalytical activity.
Where concentrations are stated in % (or v/v %) this shall be understood as volumetric %. Concentration of a specific constituent may for brevity be symbolized by c_{CO} i.e. with the chemical formula of that constituent as subscript.
A lean gas (such as a lean H₂S gas or a lean viscose off gas) shall be understood as a gas having a concentration of H₂S and CS₂ below the lower explosion limit, which corresponds to less than 1.25% CS₂ and less than 4.3% H₂S.
A metal oxide oxidation catalyst shall be understood as a catalyst comprising a metal oxide catalytically active in oxidation.

The present invention, as defined by the claims, relates to a process according to claim 1 for oxidation of a gas comprising at least 0.05 vol% hydrogen sulfide and at least 0.05 vol% of the sum of carbon monoxide, carbonyl sulfide and carbon disulfide, optionally in combination with a hot gas comprising the steps of
(a) directing said gas to contact, at a first temperature, a first material catalytically active in oxidation of hydrogen sulfide at said first temperature, providing a heated and partially oxidized gas, and
(b) directing said partially oxidized gas to contact, at a second higher temperature, a second material catalytically active in oxidation of carbon monoxide, carbon disulfide and/or carbonyl sulfide providing an incinerated gas characterized in said second material being catalytically inactive in the oxidation of carbon monoxide and/or carbonyl sulfide at said first temperature and said second material being catalytically active in the oxidation of carbon monoxide and/or carbonyl sulfide at said second temperature. Said first catalytically active material comprises one or more oxides of a metal taken from the group consisting of vanadium, chromium, tungsten, molybdenum, cerium, niobium, manganese and copper, on a support comprising silicon carbide or one or more oxides of metals taken from the group of aluminum, silicon and titanium with the associated benefit of said materials being effective in the catalytic oxidation of hydrogen sulfide at low temperatures and said second catalytically active material comprises a platinum group metal, preferably palladium, in combination with one or more oxides of a metal taken from the group consisting of vanadium, chromium, tungsten, molybdenum, cerium, niobium, manganese and copper, on a support comprising silicon carbide or one or more oxides of metals taken from the group of aluminum, silicon and titanium with the associated benefit of said materials being active in the catalytic oxidation of carbon monoxide and/or carbonyl sulfide.
This has the associated benefit of reducing the requirements for inlet temperature (or the amount of hot gas added e.g. by a combusted support fuel) as well as reducing the catalyst cost by reducing the required volume of expensive material catalytically active in oxidation of carbon monoxide and carbonyl sulfide, typically comprising noble metal.

In a further embodiment said first temperature is between 200 and 320°C, and preferably between 220 and 300°C, with the associated effect of this temperature being suitable for ignition of materials such as H₂S over an appropriate first catalytically active material.

In a further embodiment said second temperature is between 320 and 380°C preferably between 330 and 360°C with the associated effect of this temperature being suitable for ignition of materials such as CO and COS over an appropriate second catalytically active material.

In a further embodiment the amount of hydrogen sulfide is sufficient for raising the temperature to said second temperature by the heat developed from the oxidation of hydrogen sulfide without combining the gas with said hot gas with the associated benefit of reducing the amount of energy provided by support firing.

In a further embodiment one or both of said first and second catalytically active material is provided as a monolith structure with the associated benefit of providing an active catalyst with low pressure drop.

In a further embodiment the total concentration of H₂S is less than 2.5 vol% with the associated benefit of ensuring that the oxidation catalyst temperature remains below the deactivation temperature of about 550°C, at which catalytically active material may become physically unstable.

In a further embodiment the concentration condition c_{CS2} + 0.5 c_{COS} + 0.25 c_{CO} < 0.7 vol% is satisfied with the associated benefit of ensuring that the catalytically active material temperature remains below the deactivation temperature of about 550°C.

A further aspect of the invention relates to a process for production of sulfuric acid comprising the further steps of (c) directing said incinerated gas to contact a material catalytically active in oxidation of sulfur dioxide to sulfur trioxide providing an oxidized gas and
(d) at least partially hydrating sulfur trioxide forming sulfuric acid,
(e) withdrawing from said oxidized gas sulfuric acid.
with the associated benefit of providing a process for production of sulfuric acid from lean waste gases, which is cost and energy efficient.

In a further embodiment the process comprises the step of condensing sulfuric acid in a cooled condenser with the associated benefit of providing a process for production of sulfuric acid, which is efficient.

In a further embodiment the process comprises the step of absorbing sulfur trioxide in sulfuric acid with the associated benefit of providing a process for production of sulfuric acid, which is efficient.

A further aspect of the invention relates to a process plant according to claim 11 configured for directing a gas to a catalyst system, characterized in said catalyst system comprising a first material catalytically active in oxidation of hydrogen sulfide but substantially catalytically inactive in oxidation of carbonyl sulfide and carbon monoxide and a second material catalytically active in oxidation of carbonyl sulfide and carbon monoxide at a second higher temperature with the associated benefit of said process plant providing an economically beneficial catalyst configuration.

Said first catalytically active materials comprises one or more oxides of a metal taken from the group consisting of vanadium, chromium, tungsten, molybdenum, cerium, niobium, manganese and copper on a support comprising silicon carbide or one or more oxides of metals taken from the group of aluminum, silicon and titanium with the associated benefit of said materials being effective in the catalytic oxidation of hydrogen sulfide at low temperatures.

Said second catalytically active material comprises a platinum group metal, preferably palladium, in combination with one or more oxides of a metal taken from the group consisting of vanadium, chromium, tungsten, molybdenum, cerium, niobium, manganese and copper on a support comprising silicon carbide or one or more oxides of metals taken from the group of aluminum, silicon and titanium with the associated benefit of said materials being active in the catalytic oxidation of carbon monoxide and/or carbonyl sulfide.

In general it is preferred to use catalytically active materials, which do not comprise copper or manganese since these two metal have a tendency to form sulfates (cf. J.Phys.Chem,95,4051 (1991)).

The following reactions proceed on the catalyst surface and to some extent in the gas phase, i.e. without catalyst.
1) H₂S + 1.5 O₂ -> SO₂ + H₂O + 124 kcal/mol
2) CS₂ + 1.5 O₂ -> COS + SO₂ + 132 kcal/mol
3) COS + 1.0 O₂ -> SO₂ + CO + 64 kcal/mol
4) CO + 0.5 O₂ -> CO₂ + 68 kcal/mol

In the gas phase CS₂ alone will start reacting via reaction 2, when the temperature is around 200°C and H₂S will start reacting via reaction 1 at around 350°C. However, the gas phase oxidation of CS₂ (via reaction 2) is inhibited by the presence of H₂S, which means that CS₂ is oxidized at a much higher temperature than the stated 200°C if H₂S is present. Reaction 3 and 4 will not react in the gas phase at temperatures below 400°C.

The heat released from each of the reactions 1-4 increase the temperature of catalyst and gas. If the calorific value of the gas is too high (i.e. too high concentration of especially H₂S or CS₂), the temperature will increase above the maximum allowable catalyst temperature and thus damage the catalyst. In that case, thermal oxidation must be applied.

For each of the above reactions there is a minimum catalyst temperature, below which the reaction will not proceed. These so-called ignition temperatures for the catalyst/reaction combinations are found in Table 1 for the Pt promoted catalyst used according to the prior art and for the catalysts used in the new catalyst system.

**Table 1. Minimum ignition temperatures for oxidation catalysts used for oxidation of H₂S, CS₂, COS and CO. The metal oxide oxidation catalyst is not able to oxidise COS and CO. Below 320 °C the noble metal promoted oxidation catalyst is not active for CS₂,COS and CO oxidation.**

| | Pt promoted oxidation catalyst | Metal oxide oxidation catalyst, comprising one or more of V, Cr, W, Mo, Nb, Ce, Mn, Cu | Pd promoted oxidation catalyst |
|---|---|---|---|
| Minimum temperature for H₂S oxidation | 280°C | 200°C | (200°C) |
| Minimum temperature for COS/CS₂ oxidation | 360°C | - | 320°C |
| Minimum outlet temperature to ensure complete CO oxidation | 420°C | - | 320°C |
| Optimal inlet catalyst temperature for SO₂ conversion | 400-440°C | | |

The heat released by reaction 1 and to some extent reaction 2 can be used to increase the catalyst temperature, such that the minimum temperature for e.g. COS oxidation (360°C) can be met for the Pt based catalyst, even if the temperature at the inlet to the catalyst is below that temperature. If the H₂S concentration is sufficiently high, the heat released by reaction 1 will increase the gas and catalyst temperature above the minimum ignition temperature for COS oxidation and reaction 2 and 3 could increase the temperature to above 420°C, which again ensures complete oxidation of CO.

The present disclosure relates to a catalyst system, which utilizes the heat of reaction to ensure complete oxidation of H₂S and CS₂ at the lowest catalyst cost and at the lowest operating temperature, thus reducing the cost for preheating the lean H₂S and CS₂ gas.

### Figures

Fig.1 illustrates the temperature profile of catalyst and process gas assuming that reactions 1-4 proceed sequentially, together with relevant ignition temperatures.
Fig.2 illustrates a sequential catalyst system in a process for oxidation of lean waste gas.
Fig.3 illustrates a process for oxidation of lean waste gas and subsequent hydration and condensation into sulfuric acid, employing the disclosed catalyst system.
Fig.4 illustrates a process according to the prior art, for oxidation of lean waste gas and subsequent hydration and condensation into sulfuric acid employing a single oxidation catalyst.

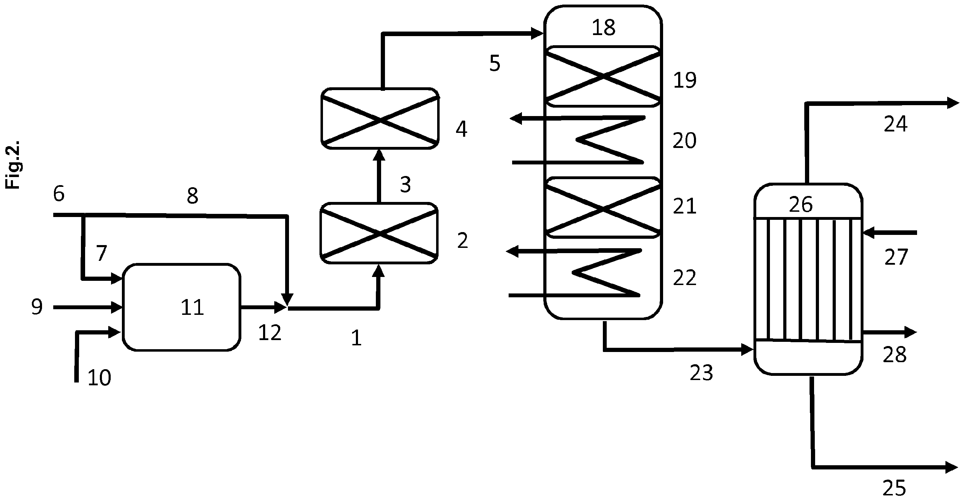

The disclosed catalyst system is shown in Fig.2. The lean H₂S and CS₂ process gas (1) is preheated to minimum 200°C and fed to a first metal oxide oxidation catalyst (2) such that oxidation of H₂S according to reaction 1 and to some extent CS₂ according to reaction 2 takes place. The process gas (3) leaving the metal oxide oxidation catalyst (2) must be above 320°C before entering the noble metal promoted catalyst (4), for reactions 2, 3 and 4 to proceed to completion. The process gas (5) leaving the noble metal promoted catalyst (4) contains SO₂, CO₂ and H₂O products and must be treated further before emitted to the atmosphere, e.g. in a sulfuric acid plant or a scrubber.

The main advantage of this catalyst system is that a relatively inexpensive metal oxide oxidation catalyst, being very active in H₂S oxidation, can be used to increase the temperature of the catalyst and process gas to minimum 320°C. At that temperature the more expensive noble metal promoted catalyst, very active in CS₂, COS, CO and H₂S oxidation can carry out the remaining oxidation. This means that the expensive noble metal promoted catalyst is only used where it is necessary and not for the H₂S oxidation where a less expensive metal oxide oxidation catalyst can catalyze the oxidation. Contrary to this, when using only a Pt-promoted catalyst according to the process of the prior art, expensive Pt is used for oxidation of H₂S, where a less expensive catalyst formulation is used according to the present disclosure.

Furthermore, the metal oxide oxidation catalyst is active at a much lower temperature than the Pt promoted catalyst, i.e. the energy required to heat up a cold lean H₂S and CS₂ gas is reduced and thus lower operating cost is achieved.

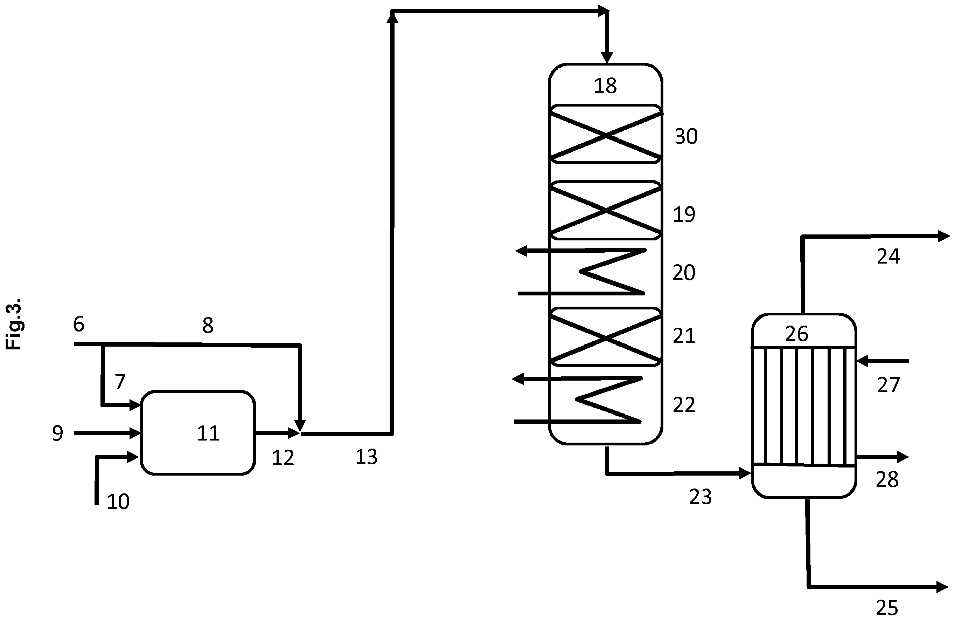

In a preferred process layout, the disclosed catalyst system is used for treatment of a lean H₂S and CS₂ gas from viscose production, producing sulfuric acid. The process layout is shown in Fig.3.

Cold lean H₂S and CS₂ gas (6) is received from a viscose producing plant. A fraction of the lean H₂S and CS₂ gas (7) is directed to combustor (11), in which elemental sulfur (9) and natural gas (10) is combusted at minimum 850°C. The hot process gas (12) leaving the combustor (11) is mixed with the cold lean H₂S and CS₂ gas (8), which has bypassed the combustor. The mixed process gas stream (1) is directed to the metal oxide oxidation catalyst (2), on which H₂S and to some extent CS₂ (via reaction (2)) is oxidized. The partly oxidized process gas (3) is then directed to the noble metal promoted catalyst (4), over which the unreacted CS₂, COS and CO is oxidized to CO₂ and SO₂. The oxidized process gas (5) leaving the noble metal promoted catalyst (4) is directed to a SO₂ reactor (18), in which an SO₂ oxidation catalyst (19+21) is installed to convert SO₂ to SO₃. To control the temperature of the second catalyst (21), a heat exchanger (20) is installed. The converted process gas is further cooled in heat exchanger (22) before leaving the SO₂ reactor (18) via line (23). In a special sulfuric acid condenser (26), the process gas is cooled and concentrated sulfuric acid is condensed and withdrawn from the bottom (25) and the cooled clean process gas leaves in the top via line (24) and is emitted via the stack. The cooling medium is atmospheric air, which enters at the top (27) and leaves at the bottom (28) of the condenser (26).

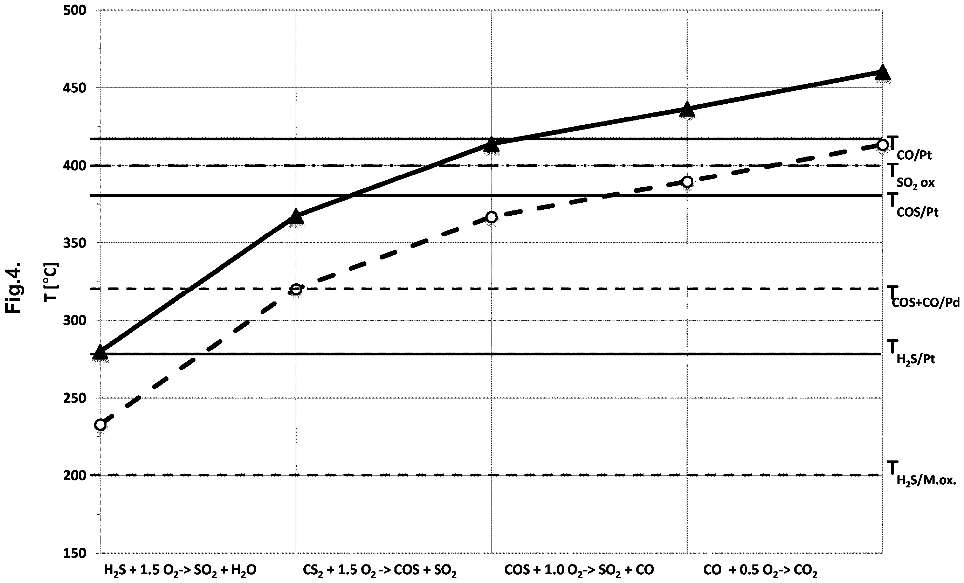

For comparison a process according to the prior art is illustrated in Fig.4. Here the two beds (14, 16) of catalytically active material for oxidizing H2S, CS₂, COS and CO are replaced by a single bed of catalytically active material (30), such as a Pt promoted catalyst, which requires a higher inlet temperature, as well as cooling of the outlet gas.

### Example 1

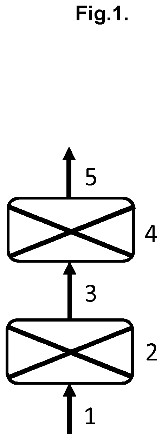

The temperature increase of process gas and catalyst(s) are shown in Fig.1 for a process gas with an initial concentration of 0.60 vol% H₂S and 0.30 vol% CS₂.

The dashed line (○) presents the disclosed catalyst system with a metal oxide oxidation catalyst to oxidize H₂S and a palladium promoted catalyst for the oxidation of CS₂, COS and CO. The solid line (Δ) presents the Pt promoted catalyst according to the prior art for carrying out all the chemical reactions.

The horizontal lines correspond to ignition temperatures as shown in Table 1 with e.g. T_{H2S/M.Ox} meaning the ignition temperature for H₂S over metal oxide.

With the disclosed catalyst system, reaction 1 (H₂S oxidation) is carried out over the metal oxide oxidation catalyst with 200°C ignition temperature. The inlet temperature is adjusted to 233°C such that the heat evolved during reaction 1 increases the temperature to 320°C, where the noble metal promoted catalyst for CS₂, COS and CO oxidation becomes active and via reaction 2,3 and 4 increases the temperature to 413°C out of the catalytic reactor.

Reaction 2 can to some extent proceed on the metal oxide oxidation catalyst and in the gas phase, but for process design purposes it is more conservative not to include a contribution to temperature increase on the metal oxide oxidation catalyst, based on the partial oxidation of CS₂ according to reaction 2.

With the Pt promoted catalyst according to the prior art it is necessary to increase the inlet temperature to 280°C for the H₂S oxidation to take place. After the H₂S oxidation, the temperature is sufficiently high for the CS₂, COS and CO oxidation to proceed. The resulting outlet temperature is 460°C well above the optimal temperature for the inlet to the SO₂ reactor in a downstream sulfuric acid plant.

### Example 2

In the production of viscose fibers, a so-called lean off gas is withdrawn from the production line. The lean off gas is atmospheric air with less than 2.5 vol% H₂S and CS₂, and typically less than 0.5 vol% of each. Since sulfuric acid is needed for the viscose/CS₂ production, this lean off gas is treated in a sulfuric acid plant. In the example described below, extra sulfuric acid production is desired and thus a stream of elemental sulfur is fed to the combustor of the sulfuric acid plant. To maintain a sufficiently high temperature in the combustor, a support fuel such as natural gas may also be added, and in other instances all support fuel may be natural gas or another fuel.

To save capital cost, a fraction of the lean off gas bypasses the combustor and added to the hot process gas leaving the combustor. This both reduces the size of the combustor and eliminates the need for cooling the process gas from the combustor to SO₂ oxidation temperatures in a waste heat boiler. Furthermore, much less support fuel is required by this process layout.

After mixing the hot process gas from the combustor with the cold bypassed lean gas, the combined process gas contains H₂S and CS₂, which must be oxidized to SO₂, CO₂ and H₂O before reaching the catalyst for conversion of SO₂ to SO₃. Catalytic oxidation is used for this purpose.

In Table 2, the difference between a Pt promoted manganese/copper oxide oxidation catalyst and the catalyst system combining a vanadium oxide based catalyst and a palladium promoted vanadium oxide based oxidation catalyst is shown. The ignition temperatures of the catalysts are as shown in Table 1, i.e. the catalyst operating temperatures must be above these temperatures to operate efficiently.

**Table 2. Operation of H₂S, CS₂, COS and CO oxidation catalysts for a process plant, treating a lean viscose off gas and elemental sulfur for further treatment in a wet type sulfuric acid plant.**

| | Pt-promoted oxidation catalyst | Combined catalyst system |
|---|---|---|
| **Feed streams** | | |
| | | |
| Temperature | 40°C | |
| H₂S concentration | 0.35 vol% | |
| CS₂ concentration | 0.32 vol% | |
| Balance | Atmospheric air | |
| | | |
| | | |
| Relative amount of natural gas flow | 100% | 86% |

| **Combustor** | | |
|---|---|---|
| Combustion temperature | 875°C | 875°C |
| Relative amount of lean viscose off gas to combustor | 100% | 90% |

| **Oxidation catalysts** | | |
|---|---|---|
| Temperature after mixing of hot process gas and cold viscose off gas | 327°C | 299°C |
| Temperature after H₂S oxidation | 360°C | 335°C |
| Temperature after H₂S and CS₂ oxidation (via reaction 2) | 393°C | 369°C |
| Temperature after complete oxidation via reactions 1-4 | 426°C | 403°C |
| Degree of oxidation | >99.9% | >99.9% |

In Table 2 it is seen that 14% less natural gas is required for the metal oxide and noble metal promoted catalyst combination, thereby reducing the operating cost. At the same time 10% less lean viscose off gas is directed to the combustor, reducing the size of the combustor and thus capital cost. In both cases complete oxidation is observed.

Processwise, a further advantage of the metal oxide/noble metal promoted catalyst system is that the temperature after complete oxidation can be kept at a temperature very close to the lower range of the optimum temperature for the SO₂ to SO₃ conversion catalyst. This allows for higher SO₂ conversion efficiency on this catalyst.

The metal oxide/noble metal promoted catalyst system will be a less expensive solution, since the initial oxidation is carried out on a catalyst without expensive noble metals and only the final oxidation is carried out with a noble metal promoted catalyst.

## Claims

1. A process for oxidation of a gas (8,1) comprising at least 0.05 vol% hydrogen sulfide and at least 0.05 vol% of the sum of carbon monoxide, carbonyl sulfide and carbon disulfide and at least an amount of oxygen sufficient for complete oxidation of H₂S and CS₂, optionally in combination with a hot gas (12) comprising the steps of
(a) directing said gas (1) optionally in combination with said hot gas (12) to contact, at a first temperature, a first material (2), comprising one or more oxides of a metal taken from the group consisting of vanadium, chromium, tungsten, molybdenum, cerium, and niobium, on a support comprising silicon carbide or one or more oxides of metals taken from the group of aluminum, silicon and titanium, providing a heated and partially oxidized gas (3), and
(b) directing said heated and partially oxidized gas (3) to contact, at a second higher temperature, a second material (4) different from said first material (2), comprising a platinum group metal, preferably palladium, in combination with one or more oxides of a metal taken from the group consisting of vanadium, chromium, tungsten, molybdenum, cerium, and niobium, on a support comprising silicon carbide or one or more oxides of metals taken from the group of aluminum, silicon and titanium, providing an incinerated gas (5).

2. A process according to claim 1, in which said first temperature is between 220 and 300°C.

3. A process according to claim 1 or 2, in which said second temperature is between 320 and 380°C preferably between 330 and 360°C.

4. A process according to claim 1, 2 or 3, in which the amount of hydrogen sulfide is sufficient for raising the temperature to said second temperature by the heat developed from the oxidation of hydrogen sulfide without combining the gas (8) with said hot gas (12).

5. A process according to claim 1, 2, 3, or 4, in which one or both of said first (2) and second (4) catalytically active material is provided as a monolith structure.

6. A process according to claim 1, 2, 3, 4 or 5, in which the total concentration of H₂S in said gas (8,1) is less than 2.5 vol%.

7. A process according to claim 1, 2, 3, 4, 5 or 6, in which the following concentration condition in said gas (8,1) is met c_{CS2} + 0.5 c_{COS} + 0.25 c_{CO} < 0.7 vol%.

8. A process for production of sulfuric acid comprising the steps of one of claim 1, 2, 3, 4, 5, 6 or 7 and the further steps of
(c) directing said incinerated gas to contact a material (19,21) catalytically active in oxidation of sulfur dioxide to sulfur trioxide providing an oxidized gas (23) and
(d) at least partially hydrating sulfur trioxide forming sulfuric acid,
(e) withdrawing from said oxidized gas sulfuric acid (25).

9. A process according to claim 8 further comprising the step of condensing sulfuric acid in a cooled condenser (26) .

10. A process according to claim 8 further comprising the step of absorbing sulfur trioxide in sulfuric acid.

11. A process plant comprising a catalyst system (2,4), and an SO₂ removal system, being either
(i) a scrubber or
(ii) a sulfuric acid production system comprising a further catalytically active material (19,21) and a process device being either an absorber or a condenser,
wherein said catalyst system (2,4) comprises a first material and a second material different from said first material and,
said process plant is configured for directing a gas stream (1) to said catalyst system (2,4), such that the gas (1) contacts said first material (2) and where said process plant is further configured for directing the gas stream (3) after having contacted the first material (2) to contact the second material (4), and for directing the gas stream (5) after having contacted the second material(4) to said SO₂ removal system,
wherein said first material (2) comprises one or more oxides of a metal taken from the group consisting of vanadium, chromium, tungsten, molybdenum, cerium, and niobium, on a support comprising silicon carbide or one or more oxides of metals taken from the group of aluminum, silicon and titanium and
said second material (4) comprises a platinum group metal, preferably palladium, in combination with one or more oxides of a metal taken from the group consisting of vanadium, chromium, tungsten, molybdenum, cerium, and niobium, on a support comprising silicon carbide or one or more oxides of metals taken from the group of aluminum, silicon and titanium, and wherein
said SO₂ removal system, if being a sulfuric acid production system is configured for directing the gas stream (5) to contact the further catalytically active material (19,21) before directing the gas stream to the absorber or the condenser.

## Patentansprüche

1. Verfahren zum Oxidieren eines Gases (8, 1), umfassend mindestens 0,05 Vol.-% Schwefelwasserstoff und mindestens 0,05 Vol.-% der Summe von Kohlenmonoxid, Carbonylsulfid und Kohlenstoffdisulfid und mindestens eine für die vollständige Oxidation von H₂S und CS₂ ausreichende Menge an Sauerstoff, gegebenenfalls in Kombination mit einem Heißgas (12), umfassend die Schritte:
(a) Führen des Gases (1), gegebenenfalls in Kombination mit dem Heißgas (12), um es bei einer ersten Temperatur mit einem ersten Material (2) in Kontakt zu bringen, das ein oder mehrere Oxide eines Metalls aus der Gruppe bestehend aus Vanadium, Chrom, Wolfram, Molybdän, Cer und Niob auf einem Träger umfassend Siliciumcarbid oder eines oder mehrere Oxide von Metallen aus der Gruppe Aluminium, Silicium und Titan enthält, zur Bereitstellung eines erhitzten und teilweise oxidierten Gases (3), und
(b) Führen des erhitzten und teilweise oxidierten Gases (3), um es bei einer zweiten höheren Temperatur mit einem zweiten, sich von dem ersten Material (2) unterscheidenden Material (4) in Kontakt zu bringen, das ein Platingruppenmetall umfasst, vorzugsweise Palladium, in Kombination mit einem oder mehreren Oxiden eines Metalls aus der Gruppe bestehend aus Vanadium, Chrom, Wolfram, Molybdän, Cer und Niob, auf einem Träger, umfassend Siliciumcarbid oder eines oder mehrere Oxide von Metallen aus der Gruppe Aluminium, Silicium und Titan, zur Bereitstellung eines gebrannten Gases (5).

2. Verfahren gemäß Anspruch 1, wobei die erste Temperatur zwischen 220 und 300 °C liegt.

3. Verfahren gemäß Anspruch 1 oder 2, wobei die zweite Temperatur zwischen 320 und 380 °C, vorzugsweise zwischen 330 und 360 °C, liegt.

4. Verfahren gemäß Anspruch 1, 2 oder 3, wobei die Menge an Schwefelwasserstoff ausreicht, um die Temperatur mittels der durch die Oxidation von Schwefelwasserstoff entwickelten Wärme auf die zweite Temperatur zu erhöhen, ohne das Gas (8) mit dem Heißgas (12) zu kombinieren.

5. Verfahren gemäß Anspruch 1, 2, 3 oder 4, wobei eines oder beide des ersten (2) und zweiten (4) katalytisch aktiven Materials als eine monolithische Struktur bereitgestellt werden.

6. Verfahren gemäß Anspruch 1, 2, 3, 4 oder 5, wobei die Gesamtkonzentration des H₂S in dem Gas (8, 1) weniger als 2,5 Vol.-% beträgt.

7. Verfahren gemäß Anspruch 1, 2, 3, 4, 5 oder 6, wobei die folgende Konzentrationsbedingung in dem Gas (8, 1) erfüllt ist
C_{CS2} + 0,5 c_{COS} + 0,25 c_{CO} < 0,7 Vol.-% .

8. Verfahren zur Herstellung von Schwefelsäure, umfassend die Schritte gemäß einem der Ansprüche 1, 2, 3, 4, 5, 6 oder 7 und die zusätzlichen Schritte (c) Führen des gebrannten Gases, um es mit einem bei der Oxidation von Schwefeldioxid zu Schwefeltrioxid katalytisch aktiven Material (19, 21) in Kontakt zu bringen, zur Bereitstellung eines oxidierten Gases (23) und
(d) zumindest teilweises Hydratisieren des Schwefeltrioxid zur Bildung von Schwefelsäure,
(e) Abziehen der Schwefelsäure aus dem oxidierten Gas (25).

9. Verfahren gemäß Anspruch 8, weiter umfassend den Schritt des Kondensierens der Schwefelsäure in einem gekühlten Kondensator (26).

10. Verfahren gemäß Anspruch 8, weiter umfassend den Schritt des Absorbierens von Schwefeltrioxid in Schwefelsäure.

11. Verfahrenstechnische Anlage, die ein Katalysatorsystem (2, 4) und ein SO₂-Entfernungssystem umfasst, das entweder
(i) ein Wäscher oder
(ii) ein Schwefelsäure-Produktionssystem, umfassend ein zusätzliches katalytisch aktives Material (19, 21) und eine Behandlungsvorrichtung, die entweder eine Absorptionsvorrichtung oder ein Kondensator ist,
ist,
wobei das Katalysatorsystem (2, 4) ein erstes Material und ein zweites Material umfasst, das sich von dem ersten Material unterscheidet, und
die verfahrenstechnische Anlage ausgestaltet ist, um einen Gasstrom (1) zu dem Katalysatorsystem (2, 4) zu führen, so dass das Gas (1) das erste Material (2) kontaktiert und wobei die verfahrenstechnische Anlage ferner ausgestaltet ist, um den Gasstrom (3) nach dem Kontaktieren mit dem ersten Material (2) so zu führen, dass er das zweite Material (4) kontaktiert und um den Gasstrom (5) nach dem Kontakt mit dem zweiten Material (4) so zu führen, dass er das SO₂-Entfernungssystem kontaktiert,
wobei das erste Material (2) ein oder mehrere Oxide eines Metalls aus der Gruppe bestehend aus Vanadium, Chrom, Wolfram, Molybdän, Cer und Niob auf einem Träger umfassend Siliciumcarbid oder ein oder mehrere Oxide von Metallen aus der Gruppe Aluminium, Silizium und Titan enthält und
das zweite Material (4) ein Metall aus der Platingruppe, vorzugsweise Palladium, in Kombination mit einem oder mehreren Oxiden eines Metalls aus der Gruppe bestehend aus Vanadium, Chrom, Wolfram, Molybdän, Cer und Niob auf einem Träger umfassend Siliciumcarbid oder ein oder mehrere Oxide von Metallen aus der Gruppe Aluminium, Silicium und Titan, enthält und wobei das SO₂-Entfernungssystem, wenn es ein Schwefelsäureproduktionssystem ist, ausgestaltet ist, um den Gasstrom (5) so zu führen, dass er das zusätzliche katalytisch aktive Material (19, 21) kontaktiert, bevor der Gasstrom zu der Absorptionsvorrichtung oder dem Kondensator geführt wird.

## Revendications

1. Procédé d'oxydation d'un gaz (8, 1) comprenant au moins 0,05 % en vol de sulfure d'hydrogène et au moins 0,05 % en vol de la somme du monoxyde de carbone, du sulfure de carbonyle et du disulfure de carbone et au moins une quantité d'oxygène suffisante pour l'oxydation complète de H₂S et CS₂, éventuellement en combinaison avec un gaz chaud (12) comprenant les étapes de
(a) orientation dudit gaz (1) éventuellement en combinaison avec ledit gaz chaud (12) pour entrer en contact, à une première température, avec un premier matériau (2), comprenant un ou plusieurs oxydes d'un métal pris dans le groupe constitué du vanadium, du chrome, du tungstène, du molybdène, du cérium, et du niobium, sur un support comprenant du carbure de silicium ou un ou plusieurs oxydes de métaux pris dans le groupe de l'aluminium, du silicium et du titane, fournissant un gaz chauffé et partiellement oxydé (3), et
(b) l'orientation dudit gaz chauffé et partiellement oxydé (3) pour entrer en contact, à une seconde température supérieure, avec un second matériau (4) différent dudit premier matériau (2), comprenant un métal du groupe du platine, préférablement du palladium, en combinaison avec un ou plusieurs oxydes d'un métal pris dans le groupe constitué du vanadium, du chrome, du tungstène, du molybdène, du cérium, et du niobium, sur un support comprenant du carbure de silicium ou un ou plusieurs oxydes de métaux pris dans le groupe de l'aluminium, du silicium et du titane, fournissant un gaz incinéré (5).

2. Procédé selon la revendication 1, dans lequel ladite première température est comprise entre 220 et 300°C.

3. Procédé selon la revendication 1 ou 2, dans lequel ladite seconde température est comprise entre 320 et 380°C préférablement entre 330 et 360°C.

4. Procédé selon la revendication 1, 2 ou 3, dans lequel la quantité de sulfure d'hydrogène est suffisante pour élever la température à ladite seconde température par la chaleur développée par l'oxydation du sulfure d'hydrogène sans combiner le gaz (8) audit gaz chaud (12).

5. Procédé selon la revendication 1, 2, 3, ou 4, dans lequel un ou les deux desdits premier (2) et second (4) matériau catalytiquement actifs est fourni comme structure monolithique.

6. Procédé selon la revendication 1, 2, 3, 4 ou 5, dans lequel la concentration totale du H₂S dans ledit gaz (8, 1) est inférieure à 2,5 % en vol.

7. Procédé selon la revendication 1, 2, 3, 4, 5 ou 6, dans lequel la condition de concentration suivante dans ledit gaz (8, 1) est satisfaite C_{CS2} + 0,5C_{COS} + 0,25C_{CO} < 0,7 % en vol.

8. Procédé de production d'acide sulfurique comprenant les étapes de l'une de la revendication 1, 2, 3, 4, 5, 6 ou 7 et les étapes supplémentaires (c) d'orientation dudit gaz incinéré pour entrer en contact avec un matériau catalytiquement actif (19, 21) dans l'oxydation de dioxyde de soufre en trioxyde de soufre fournissant un gaz oxydé (23) et
(d) au moins l'hydratation partiellement du trioxyde de soufre formant de l'acide sulfurique,
(e) le retrait de l'acide sulfurique dudit gaz oxydé (25).

9. Procédé selon la revendication 8 comprenant en outre l'étape de condensation de l'acide sulfurique dans un condenseur réfrigéré (26).

10. Procédé selon la revendication 8 comprenant en outre l'étape d'absorption de trioxyde de soufre dans l'acide sulfurique.

11. Installation de traitement comprenant un système catalyseur (2, 4), et un système d'élimination de SO₂, étant soit
(i) un épurateur soit
(ii) un système de production d'acide sulfurique comprenant un matériau catalytiquement actif (19, 21) supplémentaire et un dispositif de traitement étant soit un dispositif d'absorption soit un condenseur,
où ledit système catalyseur (2, 4) comprend un premier matériau et un second matériau différent dudit premier matériau et,
ladite installation de traitement est configurée pour orienter un écoulement de gaz (1) vers ledit système catalyseur (2, 4), de sorte que le gaz (1) entre en contact avec ledit premier matériau (2) et où ladite installation de traitement est en outre configurée pour orienter l'écoulement de gaz (3) après avoir été mis en contact avec le premier matériau (2) pour entrer en contact avec le second matériau (4), et pour orienter l'écoulement de gaz (5) après avoir été mis en contact avec le second matériau (4) vers ledit système d'élimination de SO₂,
où ledit premier matériau (2) comprend un ou plusieurs oxydes d'un métal pris dans le groupe constitué du vanadium, du chrome, du tungstène, du molybdène, du cérium, et du niobium, sur un support comprenant du carbure de silicium ou un ou plusieurs oxydes de métaux pris dans le groupe de l'aluminium, du silicium et du titane et
ledit second matériau (4) comprend un métal du groupe du platine, préférablement du palladium, en combinaison avec un ou plusieurs oxydes d'un métal pris dans le groupe constitué du vanadium, du chrome, du tungstène, du molybdène, du cérium, et du niobium, sur un support comprenant du carbure de silicium ou un ou plusieurs oxydes de métaux pris dans le groupe de l'aluminium, du silicium et du titane, et où ledit système d'élimination de SO₂, s'il est un système de production d'acide sulfurique est configuré pour orienter l'écoulement de gaz (5) pour entrer en contact avec le matériau catalytiquement actif (19, 21) supplémentaire avant l'orientation de l'écoulement de gaz vers le dispositif d'absorption ou le condenseur.
